# EUROPEAN PATENT APPLICATION

(11) **EP 0 585 061 A2**
(43) Date of publication of application: **02.03.1994**
(21) Application number: 93306583.1
(22) Date of filing: 19.08.1993
(51) Int. Cl.: H04J 3/14, H04L 7/04

(54) **High availability leased lines**

(30) Priority: 25.08.1992 GB 9218011; 22.01.1993 GB 9301284
(71) Applicant: NORTHERN TELECOM LIMITED, Montreal, Quebec H2Y 3Y4 (CA)
(72) Inventor: Mauger, Roy Harold, Enfield, Middlesex NE2 67R (GB)
(74) Representative: Ryan, John Peter William

(57) **Abstract**

A leased-line network architecture comprises two pools of circuits connectable via a series connection of a first access system (1), a cross-connect (3) and a second access system (1). To monitor the performance of the user paths in this series connection path overheads (POHs) similar to those provided by SDH are used. These POHs are carried as CAS bits in a separate path to a traffic path (Fig. 2). In the event of unacceptable performance of the series connection user paths, a back-up connection involving a PSTN switch (2) is employed. A CRC syndrome method of framing is used for framing the POH path and for establishing the framing relation between the CAS bits on the POH path and the traffic path (Fig. 1).

## Description

This invention relates to the provision of leased telecommunications lines and in particular to ensuring high availability thereof, and a network architecture and method for achieving this.

Various telecommunication network operators provide users with leased lines for carrying data traffic. A popular service provided for customers is the so-called Kilostream line which carries data typically at a rate of 64 Kbit/sec. A fundamental problem with this service is that of fault detection by the network provider. At present the service provider may not become aware of faults until customer complaints are received. This of course is a highly unsatisfactory arrangement both for the customer and the service provider.

In order to back-up leased circuits such as Kilostream circuits so that connections are not lost upon leased circuit failure, some Kilostream users are known to be purchasing ISDN systems for location at their premises and use if the Kilostream circuit goes down, in which case the connection is switched through a PSTN network.

The current Synchronous Digital Hierachy (SDH) protocol is described in CCITT G803 (Analysis of transport networks based on the SDH). This standard provideds a procedure for end-to-end monitoring of megastream (2Mbit/s) lines However there is no analagous support available for path overhead functions for the lower bit rate kilostream (64 kbit/s) lines.

The object of the present invention is to minimise or to overcome this disadvantage.

According to one aspect of the present invention there is provided a method of monitoring error performance and continuity of user paths in a network architecture including the steps of using path overheads (POHs) similar to those provided by SDH (Synchronous Digital Hierarchy) for said monitoring, and carrying said POHs as CAS (Channel Associated Signalling) bits in a separate path to a traffic path.

According to one aspect of the present invention there is provided a network architecture, including a data path incorporating a traffic path and an overhead path associated therewith for carrying channel associated signalling (CAS) bits, characterised in that means are provided for monitoring the performance of the traffic path via cyclic redundancy code (CRC) bits incorporated in the CAS bits on the on the overhead path.

In order to provide framing of the POH path and to establish the framing relation between the CAS bits of the POH path and the traffic path use is made of a CRC syndrome method of framing.

The present invention in one aspect proposes that the PSTN network be used as a leased-line back-up but that the need for its use is determined within the network rather than at a user's premises.

Embodiments of the invention will now be described with reference to the accompanying drawings, in which:-
Fig. 1 illustrates in highly schematic form a Kilostream transmission system according to one embodiment of the invention;
Fig. 2 illustrates a path overhead for the system of Fig. 1;
Fig. 3 illustrates the support of the path overhead for the 64 Kb/s paths;
Fig. 4 illustrates the 64Kb/s path overhead functions, and
Fig. 5 illustrates a network architecture for a high availability leased-line service.

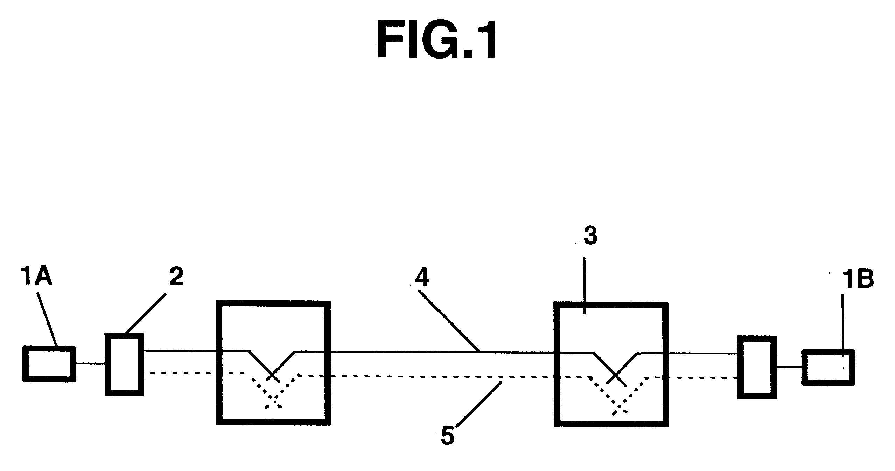

Referring to Fig. 1, data communication is effected between terminal stations 1A and 1B via access systems 2 and cross-connects 3. Data traffic is carried on a Kilostream traffic path 4, e.g. a 64 kbit/sec path. A parallel path overhead 5 is also provided.

In the arrangement of Fig. 1, the path overhead is carried in channel associated signalling (CAS) bits transparently end-to-end across the network. In the British and European signalling protocol, this channel associated signalling is generally carried in time slot 16 within a 32 time slot frame.

In the arrangement of Fig. 1, this path overhead is carried in CAS (Channel Associated Signalling) bits transparently end-to-end across the network. The path overhead function is closely similar to the corresponding function within SDH (synchronous digital hierarchy).

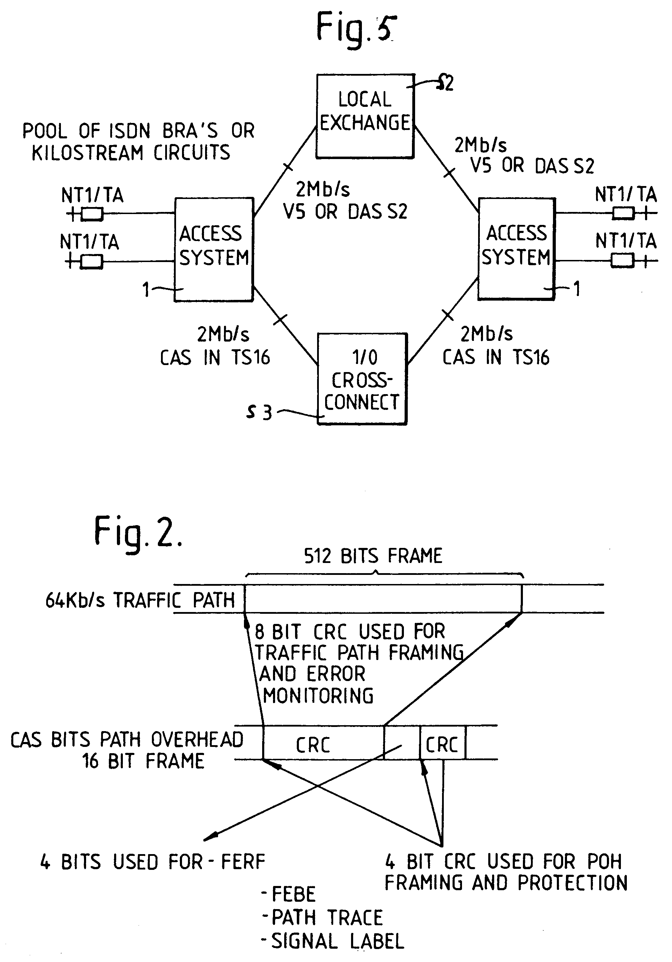

When the access circuits are used for leased lines requiring signalling, then the signalling functions are carried transparently over the CAS channel. When the circuit is used for the purpose of kilostream data, the corresponding CAS channels are available end-to-end and may be used for a path overhead function.The adaptation of the CAS signalling channel to a path overhead function is described with refernce to Fig.2 below.

Fig. 2 illustrates a path overhead on e.g. 64kb/s paths. There is a 64kb/s traffic path and a separate CAS bits path overhead. As will be appreciated CAS bits are usually used for signalling associated with traffic paths, however, we are using them for path overhead. There is a 512 bit frame on the traffic path which includes an 8 bit CRC (cyclic redundancy check) used for traffic path framing and error monitoring. The CAS bits path overhead is a 16 bit frame including a 4 bit CRC used for path overhead (POH) framing and protection and 4 bits used for FERF (Far End Receiver Failure), FEBE (Far End Block Error), path trace and signal label. These are all standard SDH functions. Thus the CAS bits proposed as POH for 64Kb/s paths provide the same management functionality as for SDH paths. The CAS bits are cross connected by cross connects 3, as are the traffic paths, and thus the POH can be extended end-to-end across the network. In the event that the CAS bits are actually required for signalling, such as for some analogue leased-lines, then the POH function will not be provided.

In our co-pending GB application 90/09933.4 (Serial No. 2232040) S D Brueckheimer 1X) there is disclosed a method of frame synchronisation of a data stream using a CRC encoder header. The CRC is used both for protecting the header and framing the structure. This method is hereinafter referred to as a CRC syndrome method of framing.

Within the overhead path there is proposed a direct application of the CRC syndrome method of framing and protecting the rest of the header, assuming the rest of the frame bits are zero and thus that there is only the header. In the illustrated arrangement with a separate stream for the CRC from the traffic path there is the difficulty that the relative phrase of the CRC's of the two paths is not known and that this phase can vary from one application to another i.e. there is a differential delay through the cross-connect between the traffic path and the CAS bits. This is overcome by a second application of the CRC syndrome method of framing in order to establish the framing relationship between the CAS bits and the traffic path.

Thus the CRC syndrome method of framing is used on the path overhead itself and in order to establish the framing relationship between the CAS bits on the POH and the traffic path.

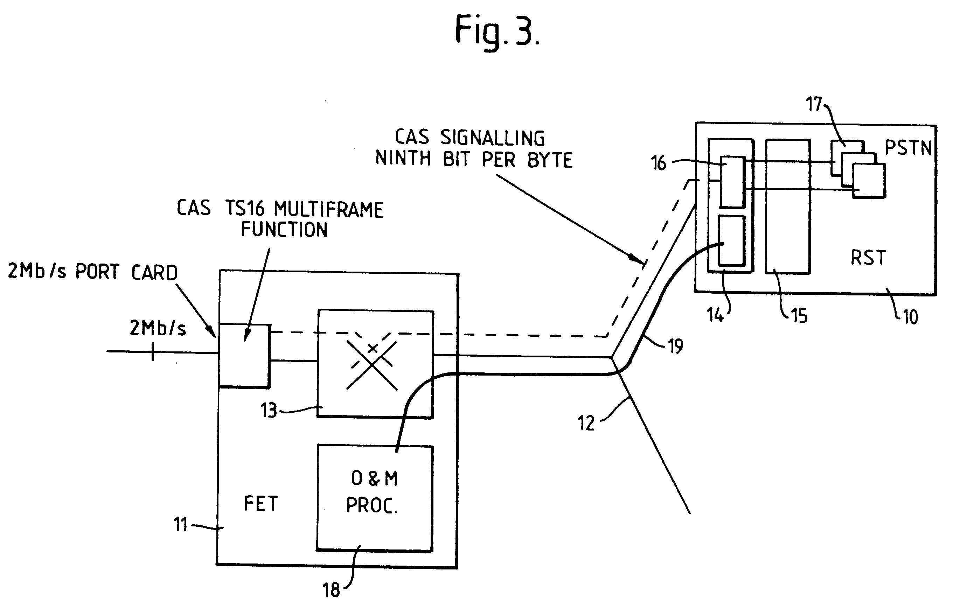

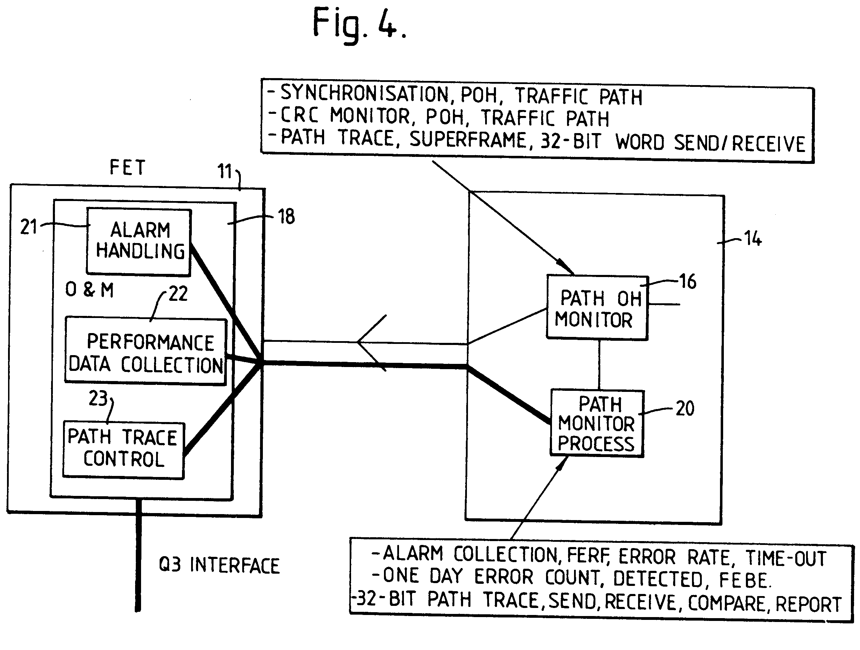

An implementation of the invention in the context of a Fibre-in-the-loop (FITL) system intended for small and medium business applications will now be described with reference to Figs. 3 and 4. The FITL system comprises two main parts, a Remote Services Terminal (RST) 10 which is located on a business customer's premises and a Fibre Exchange Terminal (FET) 11 which is located in an exchange building and provides the connection to the rest of the telecommunications network. An FET 11 is connected to a number of RSTs by means of a Passive Optical Network (PON) 12. Each PON 12 can serve typically 16 to 32 RSTs and an FET can support typically 4 PONs.

The support of the Path Overhead for 64Kb/s paths is illustrated in Fig. 3. In the FITL system described a number of 64Kb/s channels can share access to the PON on a TDM/TDMA basis. The bandwidth allocation is on a byte oriented basis and an additional ninth bit is allocated per byte to provide the capacity for the CAS bits which are used as a path overhead. The FET 11 connects to the network by means of 2Mb/s ports in which the timeslot is formatted with a multiframe to support CAS signalling bits through the network. The CAS signalling multiframe is demultiplexed together with the traffic channels and the two traffic streams are merged in nine bit bytes and presented to an internal cross-connect function 13. This cross-connect function also interfaces to the PON so that a 64Kb/s path together with the CAS bits can be connected from any network port to any RST. Within an RST the CAS bits path overhead function is terminated with a multichannel path overhead monitor 16 on a Special Services card 14. An additional signalling control card 15 provides the means of signalling to the PSTN network in the event that a path failure is detected. It also provides signalling for line cards 17 that provide a PSTN service rather than a leased-line service.

The Special Services card 14 provides an Operations and Maintenance function for the Path Overhead which is linked to the O&M Processor 18 in the FET 11 by means of nailed-up 64Kb/s connection 19.

The O&M function of the Path Overhead is further expanded in Fig. 4. The diagram shows the Special Services card functions in the RST 10 and the O&M functions in the FET 11. In the RST 10 the multichannel Path Overhead Monitor 16 is a hardware EPLD which synchronises the Path Overhead and Traffic Path using the CRC syndrome method and provides a CRC monitor of the error rate on the traffic path. An additional function is to provide a superframe on the Path Trace bit of the path overhead so that 32 bit words can be used for Path Trace purposes, the Path Monitor Process 20 is a software process on a microprocessor which performs real-time critical functions in order to simplify the design of the O&M processor in the FET 11, these include alarm detection and buffering, timeouts to detect path failures, providing error counts for up to one day and managing the 32 bit path trace data. These front end functions support the software for Alarm Handling 21, Performance Data Collections 22 and Path Trace Control 23 which are located in the O&M processor 18 of the FET 11. The FET is connected to a Telecommunications Management Network (not shown) by means of a Q3 interface which allows both ends of the Path Overhead to be monitored from a single higher level management system.

Thus the invention proposes the extension of POH for managed transmission, used in SDH and ATM to monitor the error performance and continuity of user paths, to 64kb/s paths in such a way that it is compatible with existing networks by using the CAS bits defined in CCITT G732 as a path overhead. In order to solve CAS framing problems it is proposed to use the aforementioned CRC Syndrome framing technique. The proposed arrangement is compatible with existing networks in that Kilostream or ISDN BRA are used as the delivery mechanism and the already installed base of cross connects actually cross connect the CAS bits as well as the traffic paths. Thus it is compatible with existing data services and the emerging ISDN service. The principle of POHs is already established for SDH and ATM, the present invention however proposes to use this for leased-lines in a manner that is compatible with an already installed base i.e. by using the CAS bits as a POH and on a separate path to the 64kb/s traffic. In other words the present invention creates a means of carrying standard SDH functions and applying them to 64kb/s paths.

A network architecture providing a high availability leased line service is illustrated in Fig. 5. The leased line may be delivered over an ISDN Basic Rate Access (BRA), in which case it corresponds to the permanent line facility defined for ISD or a leased data circuit, such as Kilostream. The network as illustrated comprises two access systems 1, a local PSTN exchange S2 and a 1/0 cross connect S3 (1/0 meaning 2Mbit/s ports and switching 64Kbit/s channels). Leased line users are connected to network terminations NT1/TA at either end of the network so that a user can be connected by a leased line across the network to another user.

The BRAs or Kilostream lines are provided as a resource shared pool, some channels of which are leased and some of which in the case of BRA may be switched. The pool of leased lines is connected to an access system S1, such as IDMX. The access system S1 is connected to the 1/0 cross connect S3 for leased services and to the local exchange S2 for switched services.

The leased lines have a path overhead associated with them which provides an error and continuity monitor function for the leased line. In the event of loss of continuity or of an excessive error rate the leased line is temporarily reconnected through the local exchange S2 until service is restored through the cross connect S3.

In the event of a BRA failure the leased-lines can be reconnected through a spare BRA in the pool.

In the case that the local exchange switch interface is V5.1 or DASS2, then the restoration facility uses switch resources in that the restoration channels must be permanently provided. In the case of a concentrating V5.2 interface, the restoration channels can be allocated at the time of leased-line failure so no resources are permanently allocated for this purpose.

The service provided is a guaranteed leased-bandwidth with extremely high availability and an error rate which can be measured and reported to the leased-line user (customer).

## Claims

1. A network architecture, including a data path incorporating a traffic path and an overhead path associated therewith for carrying channel associated signalling (CAS) bits, characterised in that means are provided for monitoring the performance of the traffic path via cyclic redundancy code (CRC) bits incorporated in the CAS bits on the on the overhead path.

2. A network architecture as claimed in claim 1, including a first plurality of lines each connectable to one of a second plurality of lines via a series connection of a first access system, a cross connect and a second access system, and a back-up connection between the first and second access systems including a switch, and wherein upon unacceptable performance of a connection between lines made via the series connection a temporary connection is set up via the back-up connection.

3. A network architecture as claimed in claim 2, and in the form of a leased-line network architecture and wherein the switch is a PSTN (Public Switched Telephone Network) switch.

4. A network architecture as claimed in claim 1,2 or 3, characterised in that path overheads (POHs) similar to those provided by SDH are employed for error performance and continuity purposes in said series connection, which POHs are carried as CAS bits in a separate path to a traffic path.

5. A network architecture as claimed in claim 5, characterised in that, for framing the POH path, and for establishing the framing relation between the CAS bits on the POH path and the traffic path, there are provided means for achieving a CRC syndrome method of framing.

6. A method of monitoring error performance and continuity of user paths in a network architecture including the steps of using path overheads (POHs) similar to those provided by SDH (Synchronous Digital Hierarchy) for said monitoring, and carrying said POHs as CAS (Channel Associated Signalling) bits in a separate path to a traffic path.

7. A method as claimed in claim 6, characterised in that, for framing the POH path, and for establishing the framing relation between the CAS bits on the POH path and the traffic path, a CRC syndrome method of framing is employed.
